# FASCICULE DE BREVET EUROPEEN

(11) **EP 2 523 543 B1**
(45) Date de publication et mention de la délivrance du brevet: **19.07.2017**
(21) Numéro de dépôt: 11708081.2
(22) Date de dépôt: 13.01.2011
(51) Int. Cl.: A01G 9/02

(54) **SUPPORT A FACE POREUSE POUR VÉGÉTATION**
SUBSTRAT MIT EINER PORÖSEN OBERFLÄCHE FÜR VEGETATION
SUBSTRATE HAVING A POROUS SURFACE FOR VEGETATION

(30) Priorité: 13.01.2010 CH 352010
(43) Date de publication de la demande: 21.11.2012
(73) Titulaire: Haute École Du Paysage D' Ingénierie Et D' Architecture (Hepia), 1202 Genève (CH)
(72) Inventeur: PERROULAZ, Robert, CH-1203 Genève (CH); DAUNE, Laurent, F-74100 Annemasse (FR); MONGE, Nathalie, CH-1207 Genève (CH); KAUFMANN, Jacques, F-74270 Vanzy (FR)
(74) Mandataire: Grosfillier, Philippe
(86) Numéro de dépôt international: PCT/IB2011/050152
(87) Numéro de publication internationale: WO 2011/086518

(56) Documents cités:
- WO-A1-02/19797
- FR-A1- 2 636 805
- FR-A1- 2 872 381
- JP-A- 2002 232 408
- US-A- 3 908 385
- US-A- 4 023 506
- US-A1- 2007 079 553
- US-A1- 2008 003 445

## Description

### DOMAINE DE L'INVENTION

La présente invention concerne un support pour végétation que l'on peut utiliser sous forme de panneau, parpaing, bardeau ou brique par exemple.

Plus particulièrement, la présente invention concerne un module permettant la juxtaposition d'une paroi poreuse aux vides interconnectés avec un substrat comme support de végétation, en particulier en position verticale et en milieu urbain.

### ETAT DE LA TECHNIQUE

Des supports, par exemple des modules, pour la végétation sont généralement connus dans l'état de la technique.

Par exemple la publication WO 2006/010846 A1 porte sur une structure pour mur végétalisé destiné à l'embellissement urbain et à la réalisation d'écrans anti-bruit, de murets de séparation, de palissades de chantier etc. Cette publication décrit plus particulièrement des casiers de forme prismatique prévus pour être juxtaposés et/ou superposés, chaque casier étant très ajouré et rempli par exemple de terreau dans lequel peuvent se développer les racines des végétaux plantés dans le terreau. Chaque casier possède des faces grillagées ou maillées et est tapissé intérieurement d'une nappe ou toile sur sa face avant et arrière pourvue de perforations ou d'entailles au travers desquelles les végétaux peuvent être plantés dans le terreau. Plus précisément, les faces avant et arrière au moins des casiers sont recouvertes intérieurement par une nappe ou une toile fixée par agrafage ou collage qui assure la retenue du substrat de plantation. Des plantes sont mises en place au travers de perforations ou d'entailles dans la nappe ou toile de manière que leurs racines se développent dans le substrat de plantation.

Cette nappe ou toile peut remplir différents rôles: outre la retenue du terreau, rétention d'eau ou d'humidité, protection, guide visuel pour la plantation des végétaux selon un motif préétabli, décoration, support d'éclairage etc.

Selon cette structure connue, les végétaux sont donc directement plantés dans le substrat ou terreau et la nappe ou toile ne remplit que les rôles indiqués ci-dessus.

La publication WO 2004/061255 A1 décrit un autre système de support. Dans ce cas, il s'agit d'un parpaing ayant deux zones dans lesquelles on place de la terre pour y faire pousser directement des plantes.

La publication US 2008/0003445 A1 décrit une brique en céramique qui comprend une partie formée de céramique poreuse pour faire pousser des plantes en combinaison avec un support. Les plantes sont directement implantées dans la céramique poreuse, sans utilisation d'un substrat.

Le document DE 39 32 644 décrit un autre système pour faire pousser des plantes dans un cadre qui peut s'accrocher verticalement.

La publication US 2004/0010971 décrit un système sous forme de tube pour faire pousser des plantes. Le tube est creux et contient le substrat pour les plantes. Le tube comprend en outre des ouvertures permettant aux plantes de sortir du tube, lesdites plantes étant semées dans le substrat.

La publication US 2003/0196376 illustre un autre système sous forme de poteau combiné à des récipients pour faire pousser des plantes. Les récipients sont formés pour contenir de la terre par exemple et leur surfaces externes comprennent des ouvertures pour permettre le passage des plantes.

Les publications DE 10 2005 063 133 A1, GB 2 412 558 A et DE DE 20 2004 000 438 U1 décrivent encore d'autres exemples de supports pour végétaux.

### SOMMAIRE DE L'INVENTION

Le but de l'invention est d'améliorer les systèmes connus.

Plus particulièrement, un but de l'invention est de proposer un système simple pour former des éléments végétalisés, par exemple des murs/parois, pour agir sur le climat urbain, la thermique d'un bâtiment, la gestion des eaux de pluie, l'acoustique et la dépollution.

L'invention est utile pour des façades, de toutes hauteurs, constituées de matières poreuses et hybrides, minérales, végétales et/ou synthétiques - une matière en forme de terre complexe appliquée au mur et qui contiendrait des graines. C'est un 'mur ensemencé'.

L'invention concerne ainsi un système qui permette de cultiver des plantes à la verticale ou dans une position similaire.

Selon la présente invention, on construit un « module contenant », par exemple en béton, ou dans une autre matière non-poreuse. Le module comprend au moins une face ou paroi qui est poreuse dont les vides ou porosités sont interconnectés. La face poreuse est combinée à un substrat (minéral et/ou organique) dans le but de végétaliser des façades neuves ou existantes. Le module peut prendre plusieurs formes par exemple notamment celle d'un parpaing, un bardeau, un panneau ou une brique selon les modes d'exécution décrits en détail dans la présente demande.

Le module selon l'invention comporte une coque rigide, solide et autoportante et comprend, comme indiqué ci-dessus, au moins une face poreuse ou paroi comprenant des vides ou porosités interconnectés qui permettent l'installation racinaire. La végétalisation du module s'effectue par ensemencement des vides ou porosités et enracinement directement dans la surface rigide dont les porosités sont interconnectées ce qui forme l'association d'un volume d'enracinement dans la face poreuse et d'un milieu où se développent les racines et où circule l'eau dans le substrat. Les racines traversent en conséquence un élément inerte, par exemple de 2 à 3 cm (en fonction de l'épaisseur de la face poreuse), avant de trouver eau et nutriment dans le substrat, contrairement à ce qui est réalisé dans l'état de la technique, voir par exemple WO 2006/010846 A1 cité ci-dessus où les végétaux sont plantés directement dans le terreau. Ainsi, le module selon l'invention propose une forme de colonisation des vides et porosités de la face poreuse par les végétaux qui y sont plantés.

Les végétaux se développent naturellement dans les porosités de la face du module. La dimension des porosités ne permet pas aux graines des végétaux ligneux de germer sur cette surface.

De préférence, le module à face(s) poreuse(s) selon l'invention a les caractéristiques suivantes:
- Sa (ses) faces ou paroi (s) poreuse est inerte chimiquement (pas d'interaction avec le milieu au niveau chimique)
- Sa (ses) paroi (s) est (sont) constituée(s) d'un matériau non gélif (c'est-à-dire résistant aux cycles de gel et dégel) et est réfractaire, par exemple une céramique ou autre équivalent
- Il comprend une surface qui permet l'installation racinaire dans sa surface poreuse Il forme un élément dont une des faces ou paroi (au moins) est perméable, à savoir la face comprenant les vides ou macro-porosités interconnectés, ladite face étant formée d'un matériau non poreux aux vides interconnectés qui forment ladite partie poreuse
- On l'utilise par exemple pour construire un mur végétal sur un support minéral
- Il est formé d'une coque rigide plus grande que 5mm, solide, autoportante
- La perméabilité du substrat est supérieure à celle de la coque.
- Il forme un module dont la structure en couches et les matériaux agissent comme mur anti bruit

De préférence, la taille des vides (porosités) est de 1 à 3 mm ce qui permet l'installation des racines dans les porosités et la sélection des racines souhaitées grâce à une remontée capillaire qui se produit de l'intérieur vers l'extérieur (et non l'inverse). D'autres dimensions de porosités sont bien sûr possibles en fonction des circonstances.

De préférence, le module est entièrement minéral et solide et les vides interconnectés sont plus fins sur les 2-3 premiers centimètres et plus largets sur les 4-5 derniers centimètres de l'épaisseur ce qui forme un gradient de porosité.

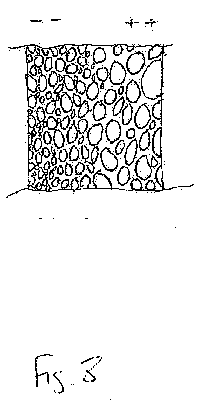

Ce gradient de porosité, illustré dans la figure 8, permet aux plantes de s'ancrer dans une première couche où les vides sont plus fins et à l'eau de circuler à l'arrière, irriguant les racines qui traversent les porosités dans la couche où les vides sont plus larges.

Le principe du gradient de porosité peut être étendu pour remplacer le substrat par un matériau solide drainant, ledit matériau étant le même que celui utilisé pour former la face poreuse mais avec des porosités plus grandes. Typiquement, pour réaliser un tel mode d'exécution de l'invention, on juxtapose des plaques (par exemple céramiques) qui ont des porosités ou des gradients de porosités différents.

Les avantages de ce module entièrement minéral selon l'invention sont notamment les suivants:
- Il est formé d'un seul matériau
- L'eau est retenue dans les concavités des vides ou porosités.
- Système hydroponique
- Système hors-sol (dans le cas du matériau solide drainant)

De façon avantageuse, le module est combiné avec un système d'irrigation. De préférence, le système d'irrigation n'est pas en contact direct avec le substrat mais il est distant (par exemple d'environ 5mm de la terre). Ainsi les racines ne bouchent pas les goutteurs du système d'arrosage. Bien entendu, on peut mettre en oeuvre d'autres moyens équivalents pour éviter que les écoulements soient bouchés par les racines.

L'eau qui circule dans le substrat ne ressort à travers la coque rigide que sous forme de vapeur.

Les avantages du module selon l'invention sont nombreux:
- Le module est résistant aux UV, aux champignons et aux algues
- Il n'y a jamais d'eau en surface mais elle est présente dans la terre ou le terreau (substrat)
- L'entretien est facilité
- L'arrosage est effectué dans le substrat contenu dans le module, par exemple par un système d'irrigation, la face aux vides interconnectées restant aérée, donc sèche
- Il est léger tout en restant rigide
- il permet des délais de livraison plus courts que les autres systèmes du marché
- il implique des coûts de transport réduits par rapport aux autres systèmes du marché, notamment sans transport de plantes
- il forme un système écologique pour le support en termes d'énergie primaire (béton).

Le module selon l'invention peut être utilisé de nombreuses façons, par exemple pour former un mur. Pour former ledit mur on empile en conséquence le nombre désiré de modules selon l'invention et on leur ajoute un système d'irrigation comme décrit plus en détail ci-après.

Bien entendu, ces modes d'exécution et dimensions sont donnés à titre d'exemple non limitatifs et d'autres modes de réalisation sont possibles avec des formes différentes mais utilisant le même principe que la présente invention.

### BREVE DESCRIPTION DES DESSINS

La figure 1 montre en perspective une vue éclatée du principe de l'invention;
La figure 2 illustre une vue partielle en coupe du principe de l'invention;
Les figures 3A à 3D illustrent une réalisation d'un mur avec des parpaings selon l'invention, la figure 3C étant une coupe selon l'axe A-A de la figure 3B et la figure 3D étant une coupe selon l'axe B-B de la figure 3B;
Les figures 4A à 4D illustrent une réalisation sous forme de bardeaux, la figure 4C étant une coupe selon l'axe A-A de la figure 4B et la figure 4D étant une coupe selon l'axe B-B de la figure 4B;
Les figures 5A à 5D illustrent une réalisation sous forme de panneaux, la figure 5C étant une coupe selon l'axe A-A de la figure 5B et la figure 5D étant une coupe selon l'axe B-B de la figure 5B;
La figure 6 illustre le principe de la porosité dans la présente invention;
La figure 7 illustre le principe de la distribution d'eau dans la présente invention;
La figure 8 illustre le gradient de porosité entre l'extérieur et l'intérieur (côté substrat).

### DESCRIPTION DETAILLEE

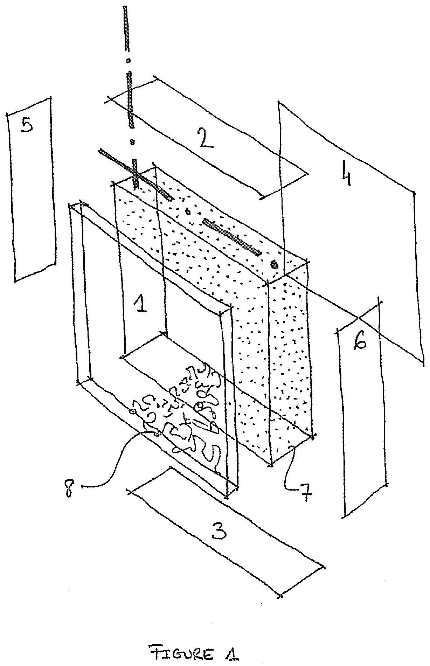

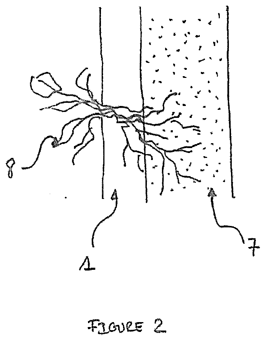

Le principe de l'invention est décrit en référence aux figures 1 et 2. Le module a la forme d'un parpaing comme illustré à titre d'exemple. Le module selon l'invention comprend donc six faces 1, 2, 3, 4, 5 et 6 comme représenté dans la figure 1. Une première face 1 est formée par une matière poreuse interconnectée. De préférence, les faces 2 et 3 sont perméables mais contenantes (pour un substrat 7), la face 2 permettant en outre le support d'une alimentation en eau horizontale. Les faces 4, 5 et 6 (arrière et cotés verticaux dans la figure 1) sont étanches et peuvent être de nature différentes. Par exemple, la face 5 (ou 6 ou les deux) peut contenir une alimentation en eau verticale.

Selon une variante, dans le cas d'une végétalisation sur deux faces (dans ce cas les faces 1 et 4 par exemple), ces faces 1 et 4 sont formées dans une matière poreuse interconnectée selon le principe de l'invention.

Pour réaliser la face de matière poreuse, on utilise un matériau avec une porosité connectée (par exemple de 2 à 3 mm) permettant la circulation de l'eau, de l'air et l'ancrage des racines.

Pour la réalisation de telle matière poreuse interconnectée, on peut utiliser une poudre céramique combinée à un deuxième matériau qui est supprimé par la suite, formant ainsi cette structure poreuse interconnectée. On peut se référer par exemple à l'enseignement des publications suivantes: EP 1 140 731, US 4,024,212 et WO 2006/018537 pour la réalisation de telles faces poreuses.

Une fois la face/paroi poreuse réalisée, on peut la joindre à des éléments en béton (par exemple) en coulant ledit béton dans les porosités de la partie poreuse. La face ou paroi poreuse peut donc avoir toute forme utile ou nécessaire en fonction de l'utilisation désirée et on peut la fixer à des parties formant le reste du module en utilisant les vides ou porosités. Bien entendu, d'autres moyens de fixation équivalents sont possibles.

De plus, selon la présente invention, la face poreuse est ensemencée. Ainsi, les porosités permettent aux graines de germer. Les concavités où circulent l'eau et l'air permettent à la plante de s'enraciner dans cette face et les racines iront ensuite chercher l'eau et les matières nutritives dans le substrat 7 en suivant les porosités ou vides interconnectés.

Selon l'invention, la porosité de la face 1 est dimensionnée pour être suffisamment importante afin que les plantes puissent s'enraciner, mais empêche la végétation ligneuse spontanée de s'installer (arbres et arbustes dont les racines pourraient endommager la structure du bâtiment).

Selon l'invention, la structure de base du module peut comprendre trois éléments (voir la figure 2):
1. un matériau poreux formant la face poreuse interconnectée (par exemple 1 dans les figures 1 et 2) qui permet à la plante de s'ancrer et de retenir le substrat 7
2. un substrat 7 qui permet la circulation de l'air, des éléments nutritifs et de l'eau nécessaire à la croissance des plantes
3. des plantes 8, adaptées à la quantité de substrat disponible, au climat, à l'orientation, à la situation verticale, à l'eau disponible

Cette structure permet à la végétation de vivre naturellement sainement et longtemps. Elle répond aux sollicitations environnementales (vent, gel et chaleur...) et a des propriétés acoustiques et thermiques.

Bien entendu, les dimensions et formes du matériau et plantations peuvent être adaptées aux besoins des lieux (sens et raisons, compositions, ...)

Les avantages de la structure selon l'invention sont nombreux en plus de ceux déjà mentionnés ci-dessus:
- Une fabrication industrielle du produit.
- Le produit est facilement manipulable (par exemple sous forme de parpaing ou autre élément équivalent)
- Sa mise en oeuvre est facile
- Elle nécessite peu d'entretien
- Les propriétés du sol sont conservées, ce matériau perméable à l'air et à l'eau et permet aux racines des plantes de s'ancrer, tout en libérant le sol de la gravité

Différentes exploitations et interprétations du système sont combinables :
- Système évolutif- dynamique : Les végétaux sont choisis selon le climat, leur exposition (ombre ou soleil) et leur mode de gestion (extensif ou intensif). Ainsi varient, les plantes, l'épaisseur du substrat et consommation en eau.
- Le système 'extensif/autonome' : Matériau poreux avec un peu de substrat. Demande très peu d'eau et très peu d'entretien. Système léger.
- On pourrait aussi imaginer que le matériau poreux suffise à l'installation de certaines plantes qui ont peu de besoins en eau et entretien.
- Le système 'évapotranspiration' : matériau poreux et couche de substrat plus importante. Permet un choix de plantes plus important et d'agir plus efficacement sur le climat urbain (plus d'évapotranspiration).

Comme indiqué, le système selon l'invention est de préférence pensé sous forme de module, chaque module pouvant être utilisé de manière indépendante. Il possède tous les éléments indispensables à sa végétalisation, soit : une face poreuse connectée à un substrat et de la végétation et a une construction qui est fonction de son utilisation prévue.

Le système constructif prévoit que le substrat soit contenu dans le module tout en permettant à l'eau de circuler.

Il peut avoir différentes dimensions en fonction de l'utilisation prévue notamment.

Il peut être exploité de différentes façons, selon différentes variantes et avec différentes plantes.

Il est préfabriqué industriellement, ensemencé en atelier ou en pépinières, et monté sur place.

A titre d'exemples non-limitatifs, le module de l'invention peut prendre les formes suivantes:

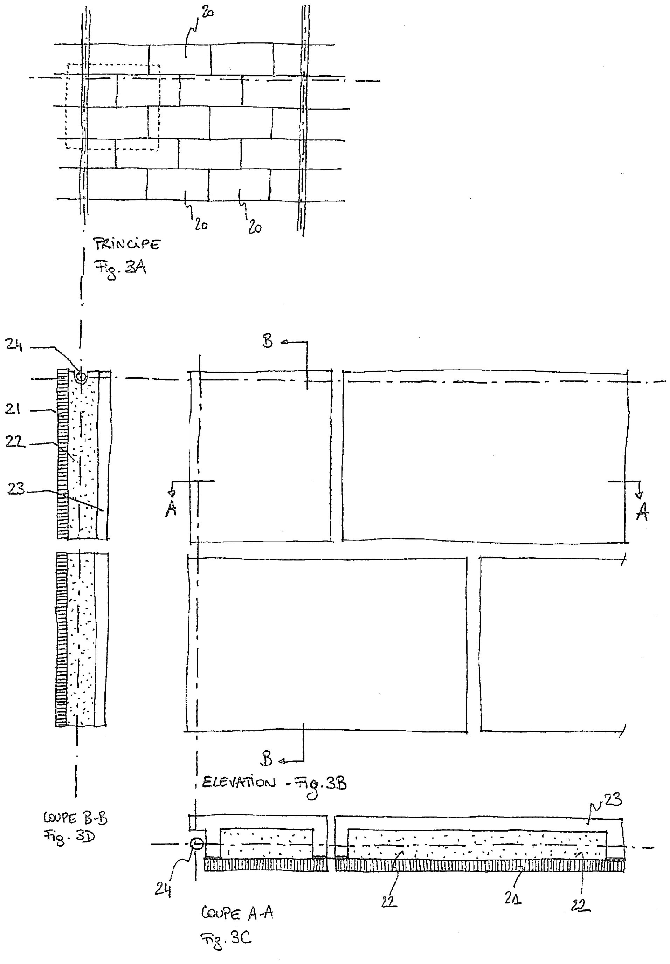

Un parpaing (voir par exemple les figures 1 et 2), dont un des parements la face 1 ou les faces 1 et 4 sont formées d'un matériau poreux aux vides interconnectés dans toutes les directions de l'espace. Les éléments « parpaings » se manipulent facilement, s'empilent et se juxtaposent. Les volumes intérieurs sont continus de haut en bas. Sa rigidité lui confère également une fonction structurelle La figure 3A montre le principe d'un mur formé de parpaings 20 selon la présente invention.

Plus précisément, la figure 3A est une vue de face d'une partie de mur composé de parpaings 20 sur laquelle la distribution d'eau est illustrée de façon schématique par des traits mixtes. La figure 3B est une vue en élévation d'une partie de mur, la figure 3C est une vue en coupe selon un plan horizontal A-A et la figure 3D est une vue en coupe selon un plan vertical B-B.

Plus précisément, dans les figures 3C et 3D on aperçoit la face poreuse 21, le substrat 22, le contenant 23, par exemple correspondant aux faces 3-6 de la figure 1 et le système d'irrigation 24 qui est à la fois horizontal et vertical (voir les traits mixtes des figures 3A-3D).

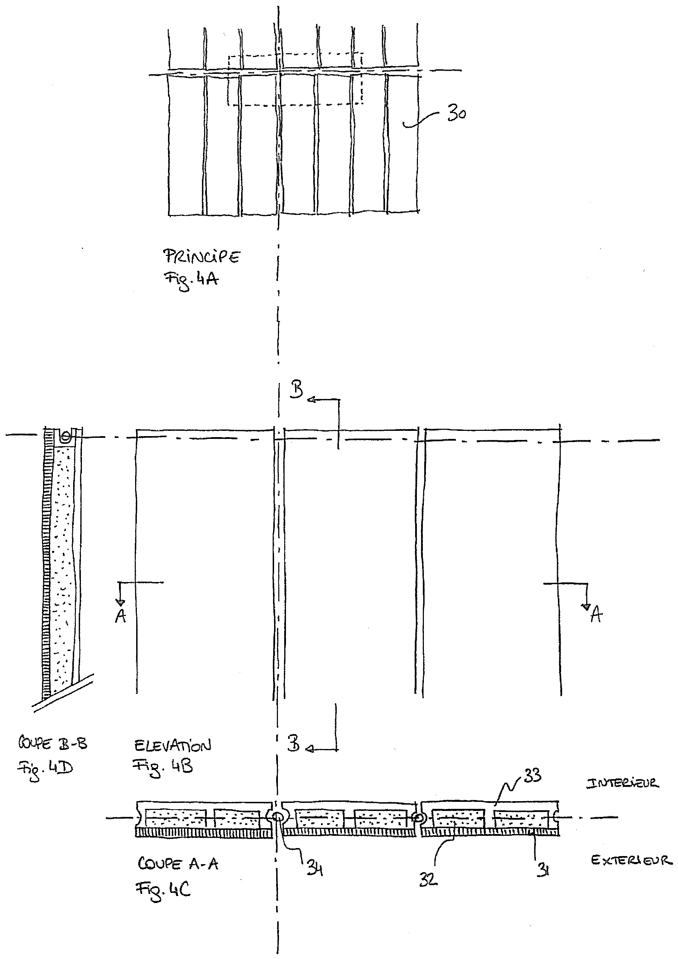

Les figures 4A à 4D illustrent un mode d'exécution sous forme de bardeau 30 dont la face avant est composée d'un matériau poreux aux vides interconnectés dans toutes les directions de l'espace avec système d'accrochage sur mur. Selon le principe de l'invention, les bardeaux comprennent une face poreuse 31, un substrat 32, un contenant 33 et un système d'irrigation 34 (schématisé par les traits mixtes des figures 4A-4D et 4C).

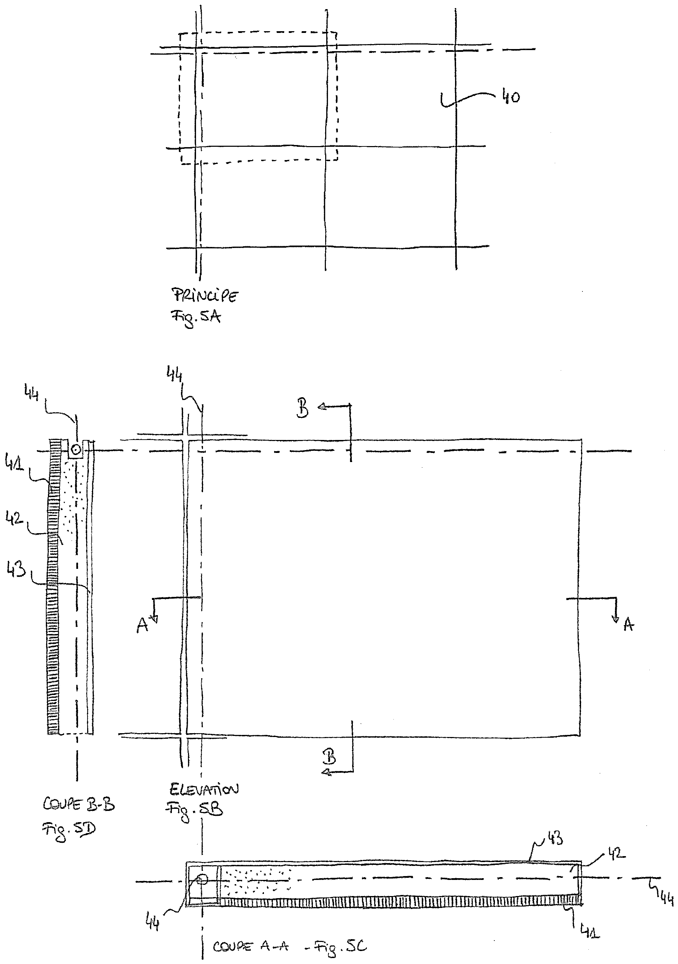

Les figures 5A à 5D illustrent un mode d'exécution sous forme de panneau 40 agrafé sur un mur ou une structure intermédiaire qui comprendrait la face 41 formées d'un matériau poreux aux vides interconnectés dans toutes les directions de l'espace. Le panneau comprend en outre, selon la présente invention, un substrat 42, un contenant 43 et un système d'irrigation 44 (schématisé par les traits mixtes dans les figures 5A-5D).

Comme indiqué précédemment, le module peut être indépendant, végétalisé sur une ou deux faces en fonction de son utilisation, aussi des différents modes d'exécution décrits ci-dessus.

De préférence, un système d'irrigation type goutte à goutte est intégré dans le principe. L'eau circule dans l'épaisseur du substrat, l'excédent est récupéré et réutilisé ce qui limite les pertes. Le système d'irrigation est schématisé dans les figures décrites ci-dessus, comme expliqué et comprend par exemple des tuyaux ou conduits 24, 34, 44 avec des ouvertures (par exemple des fentes) permettant le passage du moyen d'irrigation (par exemple de l'eau) dans le substrat. D'autres systèmes équivalents sont bien entendu envisageables.

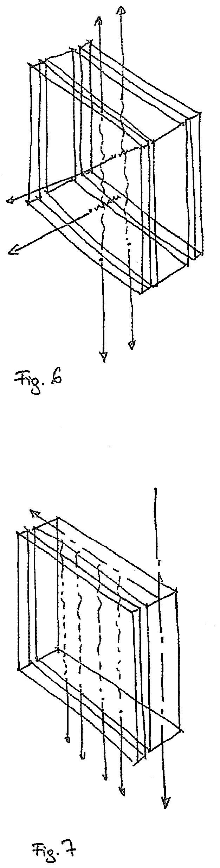

La figure 6 illustre le principe de la porosité dans le module selon l'invention. Comme on le constate, le flux d'air (schématisé par des flèches) peut circuler dans toutes les directions.

La figure 7 illustre le principe de distribution de l'eau (comme aussi représenté dans les figures 3A-3D, 4A-4D et 5A-5D). Comme indiqué, la distribution se fait dans deux plans perpendiculaires (ou approximativement perpendiculaires), à savoir dans un plan horizontal et un plan vertical. Bien entendu, en fonction de la position du module (quelque soit son mode d'exécution), ces plans peuvent ne pas être strictement horizontal et vertical.

Le système permet une meilleure isolation de la façade, protection thermique (en été comme en hiver) et permet par conséquent une économie d'énergie.

Les éléments constitutifs (épaisseur du substrat, le choix des végétaux, débit d'eau..) seront choisis en fonction de l'orientation du mur ou des volontés esthétiques et écologiques.

Selon des variantes, il est possible de colorer le matériau poreux et ou d'autres faces du module. L'utilisation d'un matériau translucide permet un éclairage de la façade par des leds ou d'autres moyens équivalents.

La surface poreuse extérieure peut être plane ou mise en forme.

Le module peut être utilisé à la verticale, en oblique ou à l'horizontale.

Bien entendu, les exemples donnés ci-dessus le sont à titre illustratif et ne doivent pas être compris comme limitant la portée de la présente invention pour laquelle des variantes sont possibles. Les différents modes d'exécution peuvent par exemple avoir toutes dimensions, déterminées par exemple par l'application.

De plus, la notion de face ou paroi utilisée pour définir la partie poreuse du module doit se comprendre comme couvrant à la fois une face ou paroi complète du module mais aussi une face ou paroi partielle du module. Dans ce cas, une face ou paroi donnée peut avoir une partie poreuse (selon la présente invention, c'est-à-dire qui comprend de la végétation) et une partie non poreuse.

Comme décrit ci-dessus, le module peut également posséder plus d'une face ou paroi poreuse selon l'invention.

## Revendications

1. Module contenant pour végétaliser des murs, par exemple des façades, ledit module comprenant au moins une face poreuse comprenant des porosités interconnectées (1), ladite face poreuse permettant la circulation de l'eau, de l'air et étant utilisée pour semer des plantes et ancrer les racines desdites plantes dans lesdites porosités, lesdites racines se développant dans un substrat (7) après avoir traversé lesdites porosités.

2. Module selon la revendication 1, dans lequel ladite face poreuse comprend un gradient de porosité selon lequel les vides interconnectés sont plus fins sur le côté extérieur du module et sont plus larges sur le côté intérieur du module.

3. Module selon l'une des revendications précédentes, ledit module étant formé de béton ou d'une autre matière équivalente.

4. Module selon l'une des revendications précédentes, dans lequel les porosités ont une dimension de l'ordre d'au moins 0.5mm.

5. Module selon l'une des revendications 1 à 3, dans lequel les porosités ont une dimension de 1 à 3mm.

6. Module selon l'une des revendications précédentes, comprenant deux faces poreuses ou plus.

7. Module selon l'une des revendications précédentes, dans lequel le substrat est formé de terre et/ou de terreau, ou d'un matériau solide drainant.

8. Module selon la revendication précédente, dans lequel le matériau solide drainant est le même que celui utilisé pour former la face poreuse, ledit matériau solide drainant comprenant des porosités interconnectées.

9. Module selon la revendication précédente, dans lequel les porosités interconnectées dudit matériau solide drainant sont plus grandes que celles de la face poreuse, le module étant formé d'une juxtaposition d'éléments de dont les porosités ont des dimensions variables.

10. Module selon l'une des revendications précédentes, combiné à un système d'irrigation.

11. Module selon la revendication 10, dans lequel le système d'irrigation est actif dans deux directions approximativement perpendiculaires

12. Module selon la revendication 10 ou 11, dans lequel le système d'irrigation comprend des tuyaux avec des ouvertures, ledits tuyaux étant situé à une distance d'approximativement 5mm du substrat pour éviter qu'elles ne soient bouchées par des racines..

13. Module selon l'une des revendications précédentes, ayant la forme d'un parpaing avec six faces (1,2,3,4,5,6), l'une desdites faces au moins formant ladite face aux porosités interconnectées (1), et le substrat étant placé à l'intérieur dudit parpaing.

14. Module selon l'une des revendications 1 à 12, ayant la forme d'un bardeau.

15. Module selon l'une des revendications 1 à 12, ayant la forme d'un panneau.

16. Construction comprenant au moins un module selon l'une des revendications précédentes.

## Patentansprüche

1. Behältermodul zur Bepflanzung von Mauern, beispielsweise Fassaden, wobei das Modul mindestens eine poröse Fläche umfasst, die miteinander verbundene Porositäten (1) umfasst, wobei die poröse Fläche das Zirkulieren von Wasser und Luft gestattet und dem Säen von Pflanzen und dem Verankern der Wurzeln der Pflanzen in den Porositäten dient, wobei sich die Wurzeln, nachdem sie durch die Porositäten hindurchgegangen sind, in einem Substrat (7) entwickeln.

2. Modul nach Anspruch 1, wobei die poröse Fläche einen Porositätsgradienten umfasst, nach dem die miteinander verbundenen Hohlräume an der äußeren Seite des Moduls schmaler und an der inneren Seite des Moduls breiter sind.

3. Modul nach einem der vorhergehenden Ansprüche, wobei das Modul aus Beton oder einem anderen äquivalenten Stoff gebildet ist.

4. Modul nach einem der vorhergehenden Ansprüche, wobei die Porositäten eine Abmessung in der Größenordnung von mindestens 0,5 mm haben.

5. Modul nach einem der Ansprüche 1 bis 3, wobei die Porositäten eine Abmessung von 1 bis 3 mm haben.

6. Modul nach einem der vorhergehenden Ansprüche, umfassend zwei oder mehr poröse Flächen.

7. Modul nach einem der vorhergehenden Ansprüche, wobei das Substrat aus Erde und/oder Gartenerde oder aus einem festen dränierenden Material gebildet ist.

8. Modul nach dem vorhergehenden Anspruch, wobei das feste dränierende Material dasselbe ist, das zum Bilden der porösen Fläche verwendet wird, wobei das feste dränierende Material miteinander verbundene Porositäten umfasst.

9. Modul nach dem vorhergehenden Anspruch, wobei die miteinander verbundenen Porositäten des festen dränierenden Materials größer als jene der porösen Fläche sind, wobei das Modul aus einer Aneinanderreihung von Elementen gebildet ist, deren Porositäten verschiedene Abmessungen haben.

10. Modul nach einem der vorhergehenden Ansprüche, das mit einem Bewässerungssystem kombiniert ist.

11. Modul nach Anspruch 10, wobei das Bewässerungssystem in zwei ungefähr senkrechten Richtungen aktiv ist.

12. Modul nach Anspruch 10 oder 11, wobei das Bewässerungssystem Röhren mit Öffnungen umfasst, wobei die Röhren mit einem Abstand von ungefähr 5 mm vom Substrat angeordnet sind, um zu verhindern, dass sie nicht durch Wurzeln verstopft werden.

13. Modul nach einem der vorhergehenden Ansprüche, das die Form eines Hohlblocksteins mit sechs Flächen (1, 2, 3, 4, 5, 6) hat, wobei mindestens eine der Flächen die Fläche mit miteinander verbundenen Porositäten (1) bildet und das Substrat im Inneren des Hohlblocksteins platziert ist.

14. Modul nach einem der Ansprüche 1 bis 12, das die Form einer Schindel hat.

15. Modul nach einem der Ansprüche 1 bis 12, das die Form einer Platte hat.

16. Struktur, die mindestens ein Modul nach einem der vorhergehenden Ansprüche umfasst.

## Claims

1. Container module for vegetating walls, for example frontages, said module comprising at least one porous face comprising interconnected porosities (1), said porous face allowing the circulation of water, of air, and being used to seed plants and anchor the roots of said plants in said porosities, said roots growing in a substrate (7) after having passed through said porosities.

2. Module according to Claim 1, in which said porous face comprises a porosity gradient whereby the interconnected voids are finer on the outside of the module and wider on the inside of the module.

3. Module according to one of the preceding claims, said module being formed from concrete or from another equivalent material.

4. Module according to one of the preceding claims, in which the porosities have a dimension of the order of at least 0.5 mm.

5. Module according to one of Claims 1 to 3, in which the porosities have a dimension of 1 to 3 mm.

6. Module according to one of the preceding claims, comprising two or more porous faces.

7. Module according to one of the preceding claims, in which the substrate is formed from earth and/or from potting soil, or from a draining solid material.

8. Module according to the preceding claim, in which the draining solid material is the same as that used to form the porous face, said draining solid material comprising interconnected porosities.

9. Module according to the preceding claim, in which the interconnected porosities of said draining solid material are larger than those of the porous face, the module being formed by a juxtaposition of elements of which the porosities have variable dimensions.

10. Module according to one of the preceding claims, combined with an irrigation system.

11. Module according to Claim 10, in which the irrigation system is active in two approximately perpendicular directions.

12. Module according to Claim 10 or 11, in which the irrigation system comprises pipes with openings, said pipes being situated at a distance of approximately 5 mm from the substrate to avoid them being blocked by roots.

13. Module according to one of the preceding claims, having the form of a concrete block with six faces (1, 2, 3, 4, 5, 6), at least one of said faces forming said face with the interconnected porosities (1), and the substrate being placed inside said concrete block.

14. Module according to one of Claims 1 to 12, having the form of a shingle.

15. Module according to one of Claims 1 to 12, having the form of a panel.

16. Construction comprising at least one module according to one of the preceding claims.
